# EUROPÄISCHE PATENTSCHRIFT

(11) **EP 2 381 759 B1**
(45) Veröffentlichungstag und Bekanntmachung des Hinweises auf die Patenterteilung: **26.03.2014**
(21) Anmeldenummer: 10708885.8
(22) Anmeldetag: 04.01.2010
(51) Int. Cl.: A01G 15/00

(54) **VERFAHREN ZUR ABKÜHLUNG DER TROPOSPHÄRE**
METHOD FOR COOLING THE TROPOSPHERE
PROCÉDÉ POUR REFROIDIR LA TROPOSPHÈRE

(30) Priorität: 02.01.2009 DE 102009004081; 29.01.2009 DE 102009006603; 09.12.2009 DE 102009057369; 17.12.2009 DE 102009059005
(43) Veröffentlichungstag der Anmeldung: 02.11.2011
(73) Patentinhaber: Meyer-Oeste, Franz Dietrich, 35274 Kirchhain (DE); Ries, Ernst, 36154 Hosenfeld (DE)
(72) Erfinder: MEYER-OESTE, Franz, Dietrich, 35274 Kirchhain (DE)
(74) Vertreter: Hebing, Norbert
(86) Internationale Anmeldenummer: PCT/DE2010/000002
(87) Internationale Veröffentlichungsnummer: WO 2010/075856

(56) Entgegenhaltungen:
- WO-A2-03/013698
- WO-A2-2008/006364
- US-A- 5 912 396
- US-A1- 2008 257 977

## Beschreibung

Es wird ein technisches Verfahren zur selbstauslösenden Abkühlung der Troposphäre durch ihre Anreicherung mit halogenhaltigen hygroskopischen Aerosolen beansprucht. Das Verfahren beruht auf dem Zusatz von mindestens einem gasförmigen oder dampfförmigen Stoff aus den Gruppen der anorganischen Chlor- und Bromverbindungen zur Troposphäre.

Zum selbstauslösenden Abbau der Treibhausgase Kohlendioxid und Methan in der Troposphäre und zur Ausbildung reflektierender Wolken zwecks Abkühlung des Klimas ist in den PCT-Offenlegungsschriften mit den Int. Veröffentlichungs-Nummern.: WO 03/013698 A2, WO 2008/006364 und in der deutschen Offenlegungsschrift DE 10 2009 004 281 A1 vorgeschlagen worden, die Rauchgase von Verbrennungsprozessen in Motoren oder Ölbrennern durch Brennstoffzusätze oder Zusätze zur Verbrennung zu modifizieren, damit sie sich mit Stoffen aus der Gruppe der sog. Schutzstoffe und Vitalelemente, insbesondere aus der Gruppe der Eisenoxide und/oder Titanoxide anreichern und ggf. zusätzlich mit einem der Stoffe Sulfat, Chlorid und Siliciumdioxid anreichern.Die mit diesen Stoffen angereicherten Rauchgase sollen sodann in die Troposphäre mit dem Ziel emittiert werden, einzelne Volumenelemente der Troposphäre mit diesen Stoffen anzureichern.

Von wissenschaftlicher Seite ist zur Klimakühlung und zur Verstärkung der Global-Reflektion vorgeschlagen worden, die Bildung reflektierender und damit kühlender Wolken durch Meerwasservernebelung auszulösen. Durch die Meerwasservernebelung bilden sich Meersalzaerosolen, die als Wolkenkondensationskeime wirken. Meersalz-Aerosole können in der Atmosphäre zwar Wolkenbildung auslösen, die induzierten Wolken gehören jedoch nicht zum Wolkentyp mit hoher Reflektion und sind daher von geringer Effektivität.

Die bekannten Verfahren zur Herstellung einfacher Salz-Aerosole, die aus kleinen Aerosol-Partikeln zusammengesetzt sind, lassen sich durch mechanische Injektions-Prozesse, wie z. B. durch Versprühen mittels Düsen oder durch Ultraschall-Vibration erzeugen. Dieser Aerosol-Typ läßt sich aber nicht ohne Weiteres zur Herstellung von Salz-Aerosolen aus hygroskopischen Salzen einsetzen, weil die dabei gebildeten Aerosolpartikel für das Anwendungsziel ungeeignet sind: Der größte Teil der dabei gebildeten Aerosolteilchen besteht aus groben Teilchen oder Tröpfchen, die sich beschleunigt absetzen.

Diese Aufgabe wird durch die Merkmale des Anspruchs 1 gelöst.

Das erfindungsgemäße Verfahren löst das Klimaproblem durch den Einsatz von anorganischen halogenhaltigen Stoffen. Es wird ein technischer Weg und eine umfassende technische Lehre aufgezeigt, wie die Troposphäre mit klimakühlenden Halogeniden angereichert werden kann, die verbrennungslos hergestellt werden.

Nach dem erfindungsgemäße Verfahren werden Gasströme, wahlweise warme oder auch kalte Gasströme, mit gasförmigen als auch dampfförmigen anorganischen halogenhaltigen Stoffen beladen. Anschließend werden die nunmehr halogenhaltigen Gasströme in die Troposphäre emittiert. Das Gas, in dem sich die Aerosole nach dem erfindungsgemäßen Verfahren bilden oder in das die Aerosole nach dem erfindungsgemäßen Verfahren hineingegeben werden, wird hier als Trägergas bezeichnet. Unter einem Trägergas wird hier auch ganz allgemein die an einem Fahrzeug während der Fahrt auf dem Land, auf dem Wasser oder in der Luft vorbeiströmende Luft verstanden. Das gilt auch für die Auspuffgase, die ein solches Fahrzeug durchströmen oder die einem solchen Fahrzeug entströmen. Als Trägergas kann auch der Wind oder ein Rauch, ein Abgas oder eine Abluft wirken, wenn das Verfahren an einem festen Standort ausgeführt wird. Beispiele dafür sind die Abgase aus Schornsteinen und Kaminen und die Abluft aus Kühltürmen.

Die den Trägergasen zugesetzten halogenhaltigen Stoffe sind durch mindestens eine der folgenden Eigenschaften ausgezeichnet und betreffen ausschließlich die halogenhaltige Stoffe aus der Gruppe Chlor und Brom:
· Gasförmig bei 20 °C,
· Dampfförmig unterhalb von 500 °C,
· Messbarer Dampfdruck oberhalb von 50 °C.

Darüber hinaus verfügen die halogenhaltigen Stoffe über mindestens eine der Eigenschaften:
· Hygroskopisch,
· Bildung hygroskopischer oder hydrolysierbarer Reaktionsprodukte mit natürlichen oder künstlichen Atmosphärilien.

Darüber hinaus ist die Bildung und Freisetzung der dazu verwendeten halogenhaltigen Stoffe im erfindungsgemäßen Verfahrensablauf durch das Merkmal gekennzeichnet, dass die halogenhaltigen Stoffe nicht in Verbrennungsanlagen erzeugt werden, in denen Sauerstoff oder Sauerstoffträger oder Halogenkohlenwasserstoffe als Oxidationsmittel eingesetzt werden.

Darüber hinaus ist der Verfahrensablauf durch mindestens einen der Schritte ausgezeichnet:
· Freisetzung der halogenhaltigen Stoffe in die Troposphäre unter Anwendung der Salzwasser-Elektrolyse,
· Freisetzung der halogenhaltigen Stoffe in die Troposphäre unter Anwendung mindestens einer Reaktion aus der Gruppe der Reaktionen von metallischem Eisen und seinen Legierungen mit Halogenen, von elementarem Silicium und seinen Legierungen mit Halogenen und von metallischem Titan und seinen Legierungen mit Halogenen,
· Freisetzung der halogenhaltigen Stoffe in die Troposphäre unter Anwendung eines Trägergases,
· Bildung der halogenhaltigen Stoffe in der freien Troposphäre.

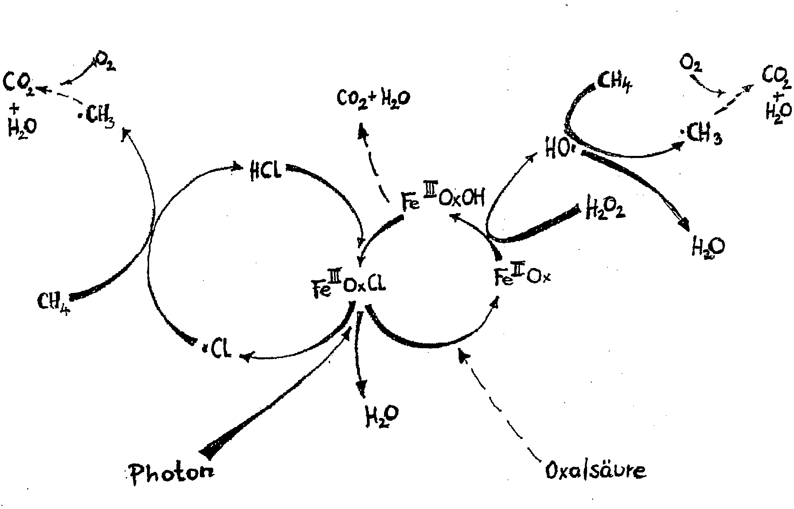

Eigene Untersuchungen haben gezeigt, dass neben dem Element Eisen die Elemente Chlor und Brom in geeigneter Bindungsform bzw. in geeigneter Konstitution die wirksamsten Elemente in der natürlichen Klimakühlung durch ihre physikalischen, photochemischen, katalytischen und biologischen Wirkmechanismen sind: Eisen in der Form von Eisensalzen setzt in Verbindung mit Chlor in der Form von Chloriden durch den Photo-Fenton-Prozess im Sonnenlicht der Troposphäre Chlorradikale und Hydroxylradikale frei, die u. a. die Methanoxidation in der Troposphäre gemäß dem Formelschema der einzigen Figur initiieren. Eisen löst durch die Photooxidation von Chlorid und Bromid einen angehobenen Chlorradikal-, Bromradikal- und Hydroxylradikal-Spiegel in der Troposphäre aus. Auch Chlor, Brom und Bromchlorid aber auch die Schwefel-Halogenverbindungen für sich setzen bei Belichtung Halogenradikale in der Troposphäre frei. Diese Radikale senken dort die Spiegel der treibhauswirksamen Substanzen Methan und Ozon, sowie den der dunklen Kohlenstoffaerosole vom Typ der Ruße und huminstoffartigen Stoffe vor allem durch Wasserstoffabstraktion. Wasserstoffabstraktion ist eine Initialreaktion, die den Abbau durch Sauerstoffangriff und Hydrolyse einleitet.

Kohlenstoff in der Form von Oxalat, in geringerem Umfang auch in der Form von anderen Carboxylaten, aktiviert diese Prozesse. Silicium fördert neben Eisen die Vermehrung und damit die Assimilation des grünen Planktons.

Die hygroskopischen Eisen(III)salz-Aerosole heben durch die angehobene Kondensationskeimdichte die Wolkenbildungsrate, die spezifische Wolkenreflektion und die Wolkenbedeckung und lösen damit zusätzliche Kühleffekte durch deren verstärkten Reflektion aus. Die durch die Eisensalz-Aerosole retardierte Tröpfchenkoagulation aktiviert die Vertikalströmungen in den Wolken und regt dadurch die Eiskristallbildung an. Die Eisbildung in den Wolken führt zur Gefrierkonzentration des über die Schneekristalloberfläche ausgebreiteten flüssigen Überzugs aus Eisenhalogenidlösung. Die Gefrier-Konzentrierung der Eisenhalogenidlösung löst zusätzliche Aktivierung der kühlungswirksamen Photooxidationsprozesse aus.

Der Niederschlag aus den Aerosolen löslicher Eisensalze und oxidisch gebundenem Silicium regen schließlich als wachstumsfördernde Mangelelemente im Ozean Kieselalgenblüten an, die die assimilative Kohlendioxid-Transformation in organische Kohlenstoffmasse und die metabolische Kohlendioxid-Transformation in carbonatische Kohlenstoffmasse durch zusätzliche Bildung der aus Calcit und Aragonit aufgebauten tierischen, pflanzlichen und bakteriellen Schalen-, Skelett- und Gerüst-Substanz anhebt. Damit wächst auch die Bildungsrate des nach dem Absinken auf den Ozeanboden nachhaltig sedimentfixierten Kohlenstoffs als Kalkstein, Methanhydrat und Kerogen.

Neben dem Element Eisen (Fe), und den Elementen Chlor (Cl) und Brom (Br), werden daher auch die Elemente Kohlenstoff (C) und Silicium (Si) in der Folge als Wirkelemente bezeichnet, weil sie in wirksamer Konstitution bzw. Bindungsform besonders zur Klimakühlung beitragen können.

Für das erfindungsgemäße Verfahren, das im Hauptanspruch beschrieben wird, werden die Wirkelemente als Stoffe eingesetzt, die über die folgenden physikalischen Eigenschaften verfügen: Sie sind gasförmig oder besitzen einen Kochpunkt unter 500 °C oder haben unterhalb von 500 °C und oberhalb von 40 °C zumindest einen messbaren Dampfdruck. Die dafür bevorzugten Bindungsformen der Wirkelemente sind Stoffe aus der Gruppe: FeCl₃, FeCl₃ x 6 H₂O, FeBr₃, FeBr₃ x 6 H₂O, SiCl₄, SiBr₄, Br₂, Cl₂, BrCl, S₂Cl₂, SCl₂, S₂Br₂, SBr₂, HBr, HCl, NH₄Cl, NH₄Br, Meersalz, Oxalylchlorid, Oxalylbromid, Oxalsäure, Formylchlorid, Ameisensäure, Ammoniumoxalat, Ammoniumhydrogenoxalat, Ammoniumformiat. Gegebenenfalls eignen sich flüchtige Säuren und Basen bzw. flüchtige Basen- und Säureprecursoren wie z. B. NH₃ und dessen wässrige Lösungen, (NH₄)₂CO₃ und SO₂ zur pH-Wert-Konditionierung der wirkelementhaltigen Aerosole.

Mindestens ein gebundenes Wirkelement wird dazu in einer oder mehrerer der Zustandsformen Dampf, Schmelze, Lösung, Dispersion, Nebel, Schmelze auf Feststoffträgern und/oder Feststoff auf Feststoffträgern bei einer Temperatur von vorzugsweise unter 500 °C derart mit einem Trägergas in Kontakt gebracht, dass das Wirkelement mit dem Trägergas ein wirkelementhaltiges Gasgemisch bildet. In all den Fällen, in denen das Wirkelement Eisen als Eisen(III)halogenid-Dampf dem Trägergas zugesetzt wird, wird vorzugsweise eine Kontakttemperatur gewählt, bei der die Konzentration des Eisens als FeCl₃-Dampf in einem trockenen Gas mindestens 10⁻⁴ Massenanteile Eisen je Massenanteil Trägergas beträgt. Als Kontakttemperatur ist hier die Temperatur gemeint, die an dem Ort herrscht, an dem das Trägergas mit Eisen(III)chlorid in Kontakt gebracht wird.

Warme bzw. heiße Trägergase sind nur dann notwendig, wenn der Wärmeinhalt des Trägergases zur Verdampfung von Wirkelementverbindungen genutzt werden soll. Werden die Wirkelementverbindungen dem Trägergas von vornherein als Gas zugesetzt, können auch kalte Trägergase genutzt werden.

Der Gehalt der einzelnen Wirkelemente im Trägergas wird vorzugsweise durch deren Zugabe zum Trägergas geregelt. Vorzugsweise wird das Trägergas mit allen Wirkelementen in der vorbestimmten Konzentration angereichert. Das mit den Wirkelementen angereicherte Trägergas wird sodann in die Troposphäre emittiert. Durch einen oder mehrere der Prozesse Abkühlung, Hydrolyse oder chemische Reaktion von mindestens einer Wirkelementverbindung können die Wirkelemente bereits im Trägergas, oder bei ihrer Emission in die Troposphäre oder erst innerhalb der Atmosphäre aus der Gasphase in eine Aerosolphase übergehen, deren Partikel bzw. Tröpfchen sich zusammensetzen können aus einer oder mehreren Phasen. Diese können aus einer hydrolysierten flüssigen Phase, einer festen bis flüssigen salzförmigen Phase oder einer flüssigen Salzlösungsphase bestehen.

Als Trägergas wird ein Rauchgas oder ein sonstiger Gasstrom verwendet. Das erfindungsgemäße Verfahren ist weiterhin dadurch gekennzeichnet, dass die Aerosol-emission in die Troposphäre von mindestens einem Standort, vorzugsweise aber von mehreren unbewegten und/oder mehreren bewegten Standorten aus geschieht. Auch die permanenten wirkelementhaltigen Gase, wie z. B. elementares Chlor, Bromwasserstoff oder Chlorwasserstoff werden vorzugsweise einem Trägergasstrom beigefügt, bevor sie der Troposphäre zugesetzt werden.

Die Masse des gemäß dem erfindungsgemäßen Verfahren pro Zeiteinheit emittierten wirkelementhaltigen Stoffs und/oder die Konzentration des wirkelementhaltigen Stoffs in dem emittierten Trägergas wird vorzugsweise derart bemessen, dass die ggf. bestehenden nach Land, Region und/oder Ort gültigen Emissionsvorschriften nicht verletzt werden. Unter dieser Maßgabe wird die Konzentration des wirkelementhaltigen Aerosols vorzugsweise so bemessen, dass das gewählte Verhältnis der emittierten Wirkelement-Masse zur emittierten Trägergasmasse mindestens 10⁻⁶ beträgt, vorzugsweise aber 10⁻⁵ überschreitet. Die Konzentration der Wirkelement-Emission in landfernen Gebieten kann bei geeigneten stürmischen Wetterbedingungen den Verhältniswert der emittierten Wirkelement-Masse zur emittierten Trägergasmasse von 10° aber durchaus erreichen, sollte ihn vorzugsweise aber nicht überschreiten. Das bevorzugte Verhältnis von emittierter Wirkelement-Masse zu emittierter Trägergasmasse liegt im Bereich zwischen 10⁻⁵ und 10⁻³.

Für den Fall, dass die halogenhaltigen Aerosole nach dem erfindungsgemäßen Verfahren noch im Trägergas gebildet werden oder zumindest unmittelbar nach Einleitung des Trägergases in die Troposphäre entstehen sollen, sollen die Massenverhältnisse der Wirkelemente im Trägergas vorzugsweise innerhalb vorbestimmter Grenzen liegen: Der Anteil des Elements Brom soll weniger als ein Prozent des Chlorgehalts im Trägergas betragen. Der Chlorgehalt soll größer sein als der Eisengehalt im Trägergas. Die Kohlenstoffgehalte in der Form von Oxalat und Formiat sind kleiner als der Eisengehalt. Im Fall, dass ein Siliciumzusatz gewählt wird, soll der Siliciumgehalt gleich oder größer dem Eisengehalt sein.

Von diesen Massenverhältnissen kann an den Stellen der Trägergaseinleitung in die Troposphäre aber vollkommen abgewichen werden, wenn die Bildung der halogenhaltigen Salzaerosole entfernt von den Stellen der Einleitung der Halogenkomponenten oder der Eisenkomponenten oder von übrigen relevanten Komponenten stattfindet. Weil die Retardierung des Halogen-Verlustes durch Auswaschung der Halogene aus der Troposphäre durch die eisenhalogenidhaltigen Aerosole unvollkommen ist, vermindert sich beständig der Halogenidgehalt der eisenhaltigen Aerosole. Gleichermaßen vermindert sich der Oxalat-Kohlenstoffgehalt durch Oxidationsverluste und auch der Eisen- und Silicium-Gehalt durch Auswaschverluste.

Es ist daher bedeutender Gegenstand des erfindungsgemäßen Verfahrens, zur Aufrechterhaltung des optimalen Aerosolgehaltes und der optimalen Zusammensetzung des troposphärischen Aerosols, insbesondere zur Aufrechterhaltung seines Eisen-, Halogen- und Oxalatgehaltes,
a) Gehalt und Zusammensetzung des Aerosols unter Nutzung des Netzes der global verteilten Aerosolmessstationen und auch z. B. satellitengestützter Analyseverfahren zu bestimmen um die Differenz zur vorbestimmten Soll-Zusammensetzung zu ermitteln
b) die gemäß Differenz zur vorbestimmten Soll-Zusammensetzung fehlenden Komponenten durch geeignete Einleitung der gasförmigen, dampfförmigen oder aerosolförmigen Zusätze in die Troposphäre vorzunehmen.

Die Aufenthaltszeit feinteiliger Aerosole in der Troposphäre beträgt Monate bis Jahre. Daher kann die Troposphäre als mehr oder weniger durchmischter einheitlicher chemisch-physikalischer Reaktionsraum angesehen werden.

Die Einleitung der Zusätze in die Troposphäre kann daher von beliebigen Orten aus geschehen. Dies geschieht ebenso wie die Einleitung der halogenhaltigen Aerosole vorzugsweise mittels Trägergasen. Bevorzugt für die Kompensation von Halogenverlusten aus den troposphärischen Aerosolen sind die gasförmigen und die dampfförmigen halogenhaltigen Stoffe, wie z. B. Chlor, Brom, Bromchlorid, Chloroxide, Bromoxide. Bevorzugt für die Kompensation von Eisenverlusten aus den troposphärischen Aerosolen sind Eisen(III)chlorid als Dampf und als Aerosole Lösungen von Eisen(III)-chlorid sowie sonstigen Eisensalzen sowie gefällte Suspensionen von Eisen(III)-oxidhhydrat und Eisen(II)sulfid. Bevorzugt für die Kompensation von Oxalatverlusten aus den troposphärischen Aerosolen sind die dampfförmigen halogenhaltigen Stoffe, wie z. B. Oxalylchlorid, Oxalsäure, und Ammoniumoxalat. Bevorzugt für die Kompensation von Siliciumverlusten aus den troposphärischen Aerosolen sind die dampfförmigen halogenhaltigen Stoffe, wie z. B. Siliciumtetrachlorid und Siliciumtetrabromid.

Nach eigenen Untersuchungen liegt der Teilchendurchmesser der Aerosolpartikel, die nach der Variante des erfindungsgemäßen Verfahrens hergestellt wurden, die im Hauptanspruch beschrieben wird, in Luft bei einem relativem Feuchtegehalt unter 30 % bei weit unter 1 µm. Bei dieser Teilchengröße haben die Aerosole eine maximale Aufenthaltszeit in der Atmosphäre, die mehr als ein Jahr betragen kann. Wenn der pH-Wert der Halogen-, Eisen- und Oxalat- enthaltenden Aerosolpartikel im Kontakt mit Wasser unter pH 4,5 und über pH 0 beträgt, hat das Aerosol eine Maximalwirkung als Kondensationskeime für den troposphärischen Wasserdampf. Innerhalb dieses pH-Wert-Bereichs, etwa zwischen pH 4,5 und pH 2,5, liegt auch das Optimum der Chlorradikalbildung und der Hydroxylradikalbildung im Photo-Fenton-Reaktionszyklus, der in Formelschema gemäß der einzigen Fig. abgebildet ist.

Die Hinzufügung der Wirkelemente in das Trägergas, mit dem diese in die Troposphäre gelangen, geschieht nach der bevorzugten Variante des erfindungsgemäßen Verfahrens, die im Hauptanspruch beschrieben ist, auf folgende Weise:

Die effektivste und daher bevorzugte Variante der erfindungsgemäßen Herstellung des wirkelementhaltigen feinteiligen Aerosols ist die des Eintrags von WirkelementVerbindungen in ein Trägergas derart, dass es dem Trägergas zunächst komplett im dampfförmigen Aggregatzustand beigefügt wird oder als Gas in das Trägergas eingeleitet wird. Auf diesem Weg lassen sich sämtliche Wirkelemente in das Trägergas eintragen: Eisen vorzugsweise als FeCl₃, Silicium vorzugsweise als SiCl₄, Chlor vorzugsweise als FeCl₃, Cl₂, BrCl oder als SiCl₄, Brom vorzugsweise als SiBr₄, Br₂, BrCl und Kohlenstoff vorzugsweise als Oxalylchlorid, Oxalsäure oder Ammoniumoxalat.

Der Eintrag der Wirkelemente Chlor und Brom kann auch in der Form der Halogenwasserstoffe oder in der Form sonstiger anorganischer flüchtiger Verbindungen geschehen, wie z. B. in der Form von Schwefelhalogeniden. Der Eintrag der Wirkelementverbindung in das Trägergas geschieht vorzugsweise durch kontrollierte Überführung der Wirkelementverbindungen in die Gasphase und Freisetzung der gebildeten Wirkelementgasphase in das Trägergas. Dazu können die jeweils in Vorratsbehältern als Flüssigkeiten, Lösungen, Schmelzen oder Feststoffe vorgelegten Wirkelementverbindungen z. B. mittels elektrischer Heizelemente oder induktiv in jeweils kontrollierter Masse pro Zeiteinheit verdampft werden und der entstehende Wirkelementdampf danach in den Trägerluftstrom eingeleitet werden. Besonders bevorzugt ist die Elektrolyse von Salzlösungen als Mittel zur Erzeugung der gasförmigen elementaren Halogene und des Bromchlorids.

Eine andere bevorzugte Methode des Kontaktes der Wirkelementverbindungen mit dem Trägergas ist die Dochtmethode. Diese kann dann angewendet werden, wenn heißes Trägergas, wie z. B. Abgas aus einem Verbrennungsprozess verfügbar ist. Dazu wird durch die jeweils in Vorlagebehältern als Flüssigkeiten oder Schmelzen vorgelegten Wirkelementverbindungen eine als Docht wirkende Kordel hindurchgeführt, die sich mit der jeweiligen Flüssigkeit benetzt und anschließend derart mit heißem Trägergas in Kontakt gebracht wird, dass die daran adhärierende Wirkverbindung vollständig-verdampft. Eine weitere bevorzugte Möglichkeit ist die jeweilige Hindurchleitung eines jeweils abgemessenen Gasstroms durch die Vorlagebehälter, in denen sich die als Flüssigkeiten, Lösungen, Schmelzen oder erwärmte Feststoffe vorgelegten Wirkelementverbindungen befinden. Dabei sättigen sich die abgemessenen Gasströme mit der jeweiligen Wirkelementverbindung bei einer vorbestimmten Temperatur und werden danach in den Trägergasstrom eingeleitet. Z. B. kann Oxalsäure auf den Docht auch als Lösung in Ameisensäure und/oder in Wasser aufgebracht werden.

Es ist zu berücksichtigen, dass es sich bei den bevorzugten Wirkelementverbindungen FeCl₃, SiCl₄, SiBr₄, Oxalylchlorid, Oxalsäure, wässriger Oxalsäurelösung und Ameisensäure insbesondere in der Hitze um hochkorrosive Flüssigkeiten handelt. Als Materialien, die von den heißen Wirkelementverbindungen berührt werden, eignen sich z. B. Keramik, Glas, Emaille, oder Sonderstähle, als Dochtmaterialien eignen sich z. B. Glas- oder Keramikfasern. Neben den genannten Materialien eignen sich bei entsprechend geringerer Temperaturbelastung korrosionsbeständige Kunststoffe wie z. B. Polyolefine, Polyvinylchlorid und Teflon.

Spätestens nach dem Eintreten des Trägergasstroms in die Atmosphäre, in der er ggf. abkühlt, hydrolysieren FeCl₃, SiCl₄ und SiBr₄ unter Bildung von FeCl₃ x 6H₂O, Si(OH)₄, HCl und HBr. Gegebenenfalls kann durch Zusatz gasförmigen Ammoniaks der besonders bevorzugte pH-Wert des Aerosols im leicht sauren Bereich zwischen pH 2 und pH 4,5 eingestellt werden.

Die als Elemente zugesetzten Halogene unterliegen erst nach ihrem Eintritt in die Troposphäre der photolytischen Spaltung zu Radikalen. Sie werden danach von den reduzierenden Atmosphärilien zu Halogenwasserstoff reduziert, um dann wieder von den eisensalzhaltigen Aerosolen zu Halogenradikalen oxidiert zu werden.

Zum Ersatz des Halogenidverlusts durch die photolytische Halogenradikalabspaltung aus den halogenidhaltigen Eisensalzen ist es vorteilhaft, die Troposphäre mit Halogen anzureichern, um den Halogenverlust der Eisensalzaerosole auszugleichen. Das geschieht am vorteilhaftesten durch den Zusatz von gasförmigem Halogen. Bevorzugt ist zu diesem Zweck die Elektrolyse insbesondere von Meerwasser. Die Meerwasserelektrolyse kann besonders energiesparend und vorteilhaft für das Klima gestaltet werden: Bei der Meerwasserelektrolyse entstehen die Produkte a) bis c).

Produkt a) besteht aus Chlor, Brom und Bromchlorid in der Form eines Gas-Dampfgemisches, das mit einem geeigneten Trägergasstrom in die Troposphäre abgeleitet wird, um den Halogenverlust der Eisensalzaerosole auszugleichen. Primär reagieren die Halogene unter dem Einfluß des Sonnenlichts in der Troposphäre mit dem Methan unter Bildung von Halogenwasserstoff und Kohlendioxid. Der gebildete Halogenwasserstoff bildet dann mit dem Eisengehalt der Aerosole Eisenhalogenidsalze.

Produkt b) besteht aus einer Lauge, die Alkalimetallhydroxide und Alkalimetallcarbonate in der Form einer flüssigen wässrigen Lösung enthält. Diese Lösung wird vorzugsweise in das Meer eingeleitet und fällt dort die im Meerwasser im Überschuss vorhandene Kohlensäure als Erdalkalicarbonate aus. Die ausgefällten Erdalkalicarbonate sinken auf den Meeresboden ab und verbleiben dort als Kalkstein- und Dolomitstein-Sediment.

Produkt c) besteht aus gasförmigem Wasserstoff. Der Wasserstoff wird vorzugsweise in ein Brennstoffelement eingeleitet. Dort wird er mit Sauerstoff oder mit Luft zu Wasser unter Erzeugung elektrischen Stroms umgesetzt. Der elektrische Strom kann entweder der elektrischen Energiewirtschaft zugeführt werden oder wiederum zur Meerwasserelektrolyse genutzt werden.

Auch kann der elektrolytisch produzierte Wasserstoff zur Wärmeerzeugung verbrannt werden. Die erzeugte Wärme lässt sich zur Vorwärmung der Reaktoren nutzen, in denen aus dem elektrolytisch produzierten Halogen z. B. die ebenfalls gemäß dem erfindungsgemäßen Verfahren dampfförmig dem Trägergasstrom zusetzbaren Halogenverbindungen hergestellt werden. Dabei handelt es sich vorzugsweise um die Halogenverbindungen Eisen(III)halogenide, Siliciumtetrahalogenide und Schwefelhalogenide. Zur Herstellung werden die jeweiligen Edukte, dabei handelt es sich vorzugsweise um mindestens ein stückiges festes Edukt aus der Gruppe Eisenschrott, Titanschrott, Schwefeleisen, Eisensilicid, Titansilicid, Silicium, entweder jedes für sich in einem Reaktor oder mehrere gemeinsam in einem Reaktor auf eine Temperatur von vorzugsweise 400 bis 650 °C vorgewärmt und danach das elektrolytisch produzierte Chlorgas in diesem Temperaturbereich durch den jeweiligen Reaktor hindurchgeleitet. Dabei bilden sich in exothermer Reaktion die genannten Halogenide als Dampf, der direkt dem Trägergas nach dem erfindungsgemäßen Verfahren zugesetzt werden kann. Vorzugsweise wird die Chlorgaseinleitung derart dosiert, dass der produzierte Halogeniddampf noch einen Anteil nicht umgesetztes Chlorgas aufweist. Eine Elementarschwefel-Schmelze, in die Chlorgas hineingeleitet wird, eignet sich hier ebenfalls als Ausgangsstoff für die Herstellung des Schwefelhalogenid-Dampfes.

Die weniger bevorzugte mechanische Erzeugung des die Wirkelemente enthaltenden Aerosols im Trägergas ist diejenige Variante des erfindungsgemäßen Verfahrens, bei der die Überführung der Halogen enthaltenden Stoffe in die Gasphase unvollständig ist oder ganz unterbleibt oder bei der solche unverdampfbaren Eisenverbindungen in die Aerosolform überführt werden, die erst in der freien Troposphäre in Halogensalze überführt werden sollen. Diese Variante soll hier trotzdem beschrieben werden, da sie geeignet ist, industrielle Nebenprodukte wie z. B. gefällte feinteilige Eisenoxidhydratschlämme aus Beizereien oder Wasserwerken sowie als Eisensulfidschlamm gefällten Schwefelwasserstoff aus der Gasentschwefelung sowie Salze und Salzlösungen des zweiwertigen Eisens aus der Eisenbeizerei und aus der Titandioxidproduktion einer vorteilhaften Verwendung im Rahmen des erfindungsgemäßen Verfahrens zuzuführen.

Die Aerosolbildung geschieht hierbei durch intensive Vernebelung einer vorzugsweise unter 20 Gewichtsprozent Eindampfrückstand enthaltenden wässrigen Lösung oder wässrigen Dispersion in das Trägergas. Darin liegt das Wirkelement Eisen in einem oder mehreren der Zustände gelöstes Eisen(III)chlorid, gelöstes Eisen(III)bromid, gelöstes Eisen(II)chlorid, gelöstes Eisen(II)bromid, Eisen(II)sulfat, Eisen(II)-ammoniumsulfat, suspendiertes Eisen(III)oxidhydrat, suspendiertes Eisen(II)sulfid vor.

An und für sich bekannte Verfahren der mechanischen Bildung von Aerosolen wie z. B. die bekannten Verfahren der Pressluftvernebelung, Einstoff-Druckdüsen-Zerstäubung, Zweistoff-Düsen-Zerstäubung, Airbrush-Zerstäubung, Mechanischen Zerstäubung, Scheibenrotor-Zerstäubung, Düsenzerstäubung oder der Vernebelung mittels Vibratoren, die im Ultraschallfrequenzbereich schwingen, lassen sich hierzu anwenden. Die bevorzugten Eindampfrückstand-Konzentrationen in der zu vernebelnden Salzlösung liegen zwischen 0,01 und 20 %. Besonders geeignet sind Eindampfrückstand-Konzentrationen in der zu vernebelnden Flüssigkeit zwischen 0,5 % und 10 %. Dort wo es durch geeignete Verfahren möglich ist, besonders feine Nebeltröpfchen zu erzeugen, wie z. B. durch Ultraschallverneblung oder durch Anwendung von mit besonders hoher Relativgeschwindigkeit strömenden Gasen bei der Anwendung von Zweistoffdüsen nach dem Strahlpumpenprinzip, wie sie beispielsweise im Abgasstrahl von Strahltriebwerken als Transportgas anwendbar sind, lassen sich hinreichend kleine Aerosolpartikel auch mit Eindampfrückstand-Konzentrationen in den zu vernebelnden Flüssigkeiten von bis zu 20 Prozent erzielen.

Schließlich ist es auch möglich, Kombinationen der Verfahrensvarianten auszuführen, indem das Trägergas sowohl mit wässrigem Aerosol als auch mit reaktivem Gas oder Dampf angereichert wird.

So eignen sich für das erfindungsgemäße Verfahren auch solche Trägergase, die bereits mit Salzaerosolen, Halogenen, Halogenwasserstoffen oder auch mit Eisenchalkogenidaerosolen angereichert sind. So kann z. B. ein Salzaerosol enthaltender Trägergasstrom, der durch die Vernebelung von Meerwasser als Halogenquelle erzeugt worden ist, erfindungsgemäß mit Aerosol angereichert werden, das mindestens eine der Komponenten Eisensalz, Eisensulfid, Eisenoxidhydrat und Kieselsäure enthält. Für Trägergase, die bereits mit halogenfreiem Eisen enthaltenden Salz- oder Chalkogenid-Aerosolen angereichert sind, eignen sich einer oder mehrere der gasförmigen Halogenwasserstoffzusätze aus den Gruppen Cl₂, Br₂, BrCl, HCl, HBr, SiCl₄, SiBr₄, Oxalylchlorid, Oxalsäure und Ameisensäure, weil deren saure Hydrolyseprodukte und/oder Oxidationspotential geeignet sind, die eisenhaltigen halogenidfreien Aerosole zumindest partiell in Eisenchloridsalze umzuwandeln.

Ein besonderer Vorteil des neuen Verfahrens ist, dass sich unmittelbar nach Eintritt in die Troposphäre aus der Halogen, Halogenid und/oder Eisensalz enthaltenden Gas-, Dampf- und/oder Aerosol-Emission sowohl reflektierende Wolken bilden können, als auch sofort der photolytische Abbau der Treibhausgase Methan und Ozon einsetzen kann.

Oxalsäure und ihre Salze treten in der Atmosphäre als natürliche Oxidationsprodukte organischer Emissionen in einer gegenüber den übrigen organischen Substanzen angehobenen Konzentration auf, so dass es nicht unbedingt notwendig ist, diese Substanzen den erfindungsgemäß generierten Aerosolen hinzuzufügen. Jedoch wirkt der Oxalsäurezusatz förderlich auf die gewünschte Radikalbildung. Überdies führt die Anhebung des Chlor- und Bromspiegels in der Troposphäre dazu, dass ein angehobener Teil der Eisensalz-Aerosole als Halogenid-Salze vorliegt. Chlorid übt einen Schutz gegen die Oxalat-Oxidation im Photo-Fenton-Oxidationscyclus aus, weil der Elektronenübergang von Chlorid auf Eisen im Photo-Fenton-Oxidationscyclus gegenüber dem Elektronenübergang von Oxalat auf Eisen bevorzugt ist (Formelschema gemäß der einzigen Fig.).

Der Trägergasstrom, mit dem das eisensalzhaltige Aerosol emittiert wird, ist vorzugsweise ein Luftstrom oder ein Abgasstrom, der vorzugsweise in überwiegend vertikale Richtungen vom Erdboden, von Türmen, von Schiffen oder von schwimmenden Plattformen aus in die Atmosphäre geblasen wird, wenn es sich um einen warmen oder heißen Abgasstrom handelt. Vorzugsweise wird das eisenhaltige Salzaerosol auch von Flugzeugen, Heißluftballonen oder Heißluftzeppelinen aus mit Abgas in die Troposphäre geblasen bzw. emittiert. Bevorzugte Emittenten sind auch die Windkraftanlagen, insbesondere ihre Flügelenden, wenn der Wind weht. Durch geeignete Schaltung wird dabei vorzugsweise das erfindungsgemäße Verfahren erst dann aktiviert, wenn die Windgeschwindigkeit einen Mindestwert von 20 km/h erreicht hat und ggf. die Windrichtung einen je nach Standort geeigneten Wert hat. Auch die Dosierung der Aerosolmenge bzw. der Aerosolprecursormenge wird an solchen Standorten vorzugsweise in Abhängigkeit von der Windgeschwindigkeit gewählt.

Besonders geeignete Eisensalze, die in den Lösungen enthalten sind, aus denen sich Salzaerosole nach der mechanischen Methode herstellen lassen, sind die Oxalate, Chloride, Bromide, Nitrate, Sulfate, Rhodanide, Ammoniumsulfate des dreiwertigen und/oder des zweiwertigen Eisens.

Besonders geeignete Chloridsalze, die in den Lösungen enthalten sind, aus denen sich Salzaerosole nach der mechanischen Methode herstellen lassen, sind die Chloride des Eisens, des Natriums, des Ammoniums, des Calciums und des Magnesiums.

Besonders geeignete Bromidsalze, die in den Lösungen enthalten sind, aus denen sich Salzaerosole nach der mechanischen Methode herstellen lassen, sind die Bromide des Eisens, des Natriums, des Ammoniums, des Calciums und des Magnesiums.

Besonders geeignete Hydrogensulfate und Sulfate, die in den Lösungen enthalten sind, aus denen sich Salzaerosole nach der mechanischen Methode herstellen lassen, sind die Hydrogensulfate und Sulfate des Eisens, des Natriums, des Ammoniums, des Eisenammonium-Alauns und des Magnesiums.

Die besonders geeignete Carbonsäure, die in den Lösungen enthalten ist, aus denen sich Salzaerosole nach der mechanischen Methode herstellen lassen, ist die Oxalsäure. Auch ihre jeweiligen Salze und Komplexe mit dem Eisen und ihre Salze mit dem Natrium und dem Ammonium eignen sich als Aerosolkomponenten.

Es hat sich hier gezeigt, dass die Aerosolpartikel besonders dann eine optimale Wirkung als Bildner für hoch reflektierende langlebige Wolken haben und auch einen hohen Wirkungsgrad zum Abbau von troposphärischem Methan haben, wenn die Eisbildung der konzentrierten wässrigen Lösung der Aerosolpartikel erst bei Temperaturen eintritt, die möglichst weit unter 0 °C liegen. Es wurde gefunden, dass diese vorteilhaften Eigenschaften der Aerosolpartikel dann erreicht werden, wenn:
· die Aerosolpartikel besonders hygroskopisch sind und
· die vernebelte Salzlösung einen pH-Wert zwischen pH 4,5 und pH 0 hat.

Die bevorzugten Anteile der Elemente Eisen, Chlor, Schwefel, Oxalat-Kahlenstoff, Silicium und Brom ohne Berücksichtigung von Wassergehalt wird sonstigen Bestandteilen in der

Zusammensetzung der freigesetzten Aerosole, und zwar unabhängig davon, ob sie aus der Gas- bzw. Dampfphase oder aus der mechanische Vernebelung hervorgegangen sind, betragen wie folgt:

| | |
|---|---|
| Eisen | gleich oder größer 5 %, |
| Chlor + Schwefel + Oxalat-Kohlenstoff + Silicium | gleich oder kleiner 90%, |
| Brom | gleich oder kleiner 5 %. |

Im Nachfolgenden werden beispielhafte Rezepturen mitgeteilt, die diese Vorgaben erfüllen und aus denen wässrige Lösungen bzw. Suspensionen hergestellt werden können, die sich zur Bildung von Aerosolen eignen, die aus der mechanische Vernebelung hervorgegangen sind,:

| Rezepturbeispiel 1: | | |
|---|---|---|
| | | |
| Eisen(III)chlorid | 1 | Gewichtsteil |
| Eisen(III)bromid | 0,01 | Gewichtsteile |
| Ammoniumoxalat | 0,1 | Gewichtsteile |
| | | |

| Rezepturbeispiel 2: | | |
|---|---|---|
| | | |
| Eisen(II)chlorid | 1 | Gewichtsteil |
| Eisen(II)bromid | 0,01 | Gewichtsteile |
| Ammoniumoxalat | 0,05 | Gewichtsteile |
| | | |

| Rezepturbeispiel 3: | | |
|---|---|---|
| | | |
| Meersalz | 1 | Gewichtsteil |
| Eisen(III)sulfat | 0,1 | Gewichtsteile |
| Ammoniumoxalat | 0,05 | Gewichtsteile |
| | | |

| Rezepturbeispiel 4: | | |
|---|---|---|
| Meersalz | 1 | Gewichtsteil |
| Eisen(III)nitrat | 0,1 | Gewichtsteile |
| Ammoniumoxalat | 0,05 | Gewichtsteile |
| | | |

| Rezepturbeispiel 5: | | |
|---|---|---|
| | | |
| Meersalz | 1 | Gewichtsteil |
| Eisen(II)sulfat | | 0,1 Gewichtsteile |
| Chlorwasserstoff | 0,01 | Gewichtsteile |
| Ammoniumoxalat | 0,05 | Gewichtsteile |
| | | |

| Rezepturbeispiel 6: | | |
|---|---|---|
| | | |
| Meersalz | 1 | Gewichtsteil |
| Eisen(III)ammoniumsulfat | 0,1 | Gewichtsteile |
| Chlorwasserstoff | 0,01 | Gewichtsteile |
| Ammoniumoxalat | 0,05 | Gewichtsteile |
| | | |

| Rezepturbeispiel 7: | | |
|---|---|---|
| | | |
| Meersalz | 1 | Gewichtsteil |
| Eisensulfid | 0,2 | Gewichtsteile |
| Chlorwasserstoff | 0,01 | Gewichtsteile |
| Ammoniumoxalat | 0,1 | Gewichtsteile |
| | | |

| Rezepturbeispiel 8: | | |
|---|---|---|
| | | |
| Meersalz | 1 | Gewichtsteil |
| Eisenoxidhydrat | 0,2 | Gewichtsteile |
| Elementarschwefel | 0,1 | Gewichtsteile |
| Chlorwasserstoff | 0,01 | Gewichtsteile |
| Ammoniumoxalat | 0,1 | Gewichtsteile |

| Rezepturbeispiel 9: | | |
|---|---|---|
| | | |
| Meersalz | 1 | Gewichtsteil |
| Eisen(III)chlorid | 0,2 | Gewichtsteile |
| Elementarschwefel | 0,1 | Gewichtsteile |
| Gelförmige Kieselsäure als SiO2 berechnet | 0,2 | Gewichtsteile |
| Oxalsäure | 0,1 | Gewichtsteile |

Für die Emission der erfindungsgemäßen Aerosole mit Trägergasströmen von landgestützten Emissionseinrichtungen aus, vorzugsweise mittels der Emissionsquellen von warmen Rauchgasen und warmen Abluft- und Abgasströmen werden die Rezepturen nach Beispiel 1 und 2 bevorzugt. Vorzugsweise enthalten die benutzten Transportgase Schwefeldioxid, das im Kontakt von dem erfindungsgemäßen Aerosol und dem Luftsauerstoff rasch als Sulfat und Hydrogensulfat absorbiert wird. Über urbanen Regionen, in denen derartige Emissionseinrichtungen stehen, ist in vielen Fällen genügend Schwefeldioxid vorhanden, um die Anreicherung des erfindungsgemäßen Aerosols mit dem besonders bevorzugten Hydrogensulfat zu erreichen. Die Bildung von Hydrogensulfat verursacht das erwünschte hygroskopische Verhalten der Aerosole auch dann noch, wenn der Verlust seiner Halogenidkomponenten durch photochemische Oxidation am Eisensalz zu flüchtigen Halogenradikalen vollständig geworden ist, und wenn sie darüber hinaus selbst keine hygroskopischen Salzkomponenten enthalten, wie z. B. in der Rezeptur gemäß Beispiel 2. Die in der Rezeptur gemäß Beispiel 1 enthaltenen Eisen(III)-Salze sind bereits von sich aus hygroskopisch.

Für die Emission der erfindungsgemäßen Aerosole mit Transportgasströmen von fliegenden Emissionseinrichtungen aus, vorzugsweise mittels der Abgasemissionsquellen der Jet-Turbinen von Verkehrsflugzeugen, werden ebenfalls die Rezepturen nach Beispiel 1 und 2 bevorzugt. Diese Transportgase enthalten ebenfalls Schwefeldioxid, dessen Gehalt im Transportgas einfach durch Anhebung des Schwefelgehaltes im Kerosin-Treibstoff erhöht werden kann. Dadurch kann das erfindungsgemäße Salzaerosol soweit mit Hydrogensulfat angereichert werden, so dass das Salzaerosol vorteilhafte hygroskopische Eigenschaften bekommt.

Die von auf dem Meer ortsgebunden verharrenden Strukturen oder von fahrenden Schiffen aus emittierten Aerosole werden vorzugsweise durch die Vernebelung von Meerwasser erzeugt, dem zusätzlich zu seinem natürlichen Salzgehalt, der bei 3,5 % und darunter liegt, lediglich Eisen und/oder Carboxylat hinzugefügt wird. Die Rezepturen 3 bis 5 geben hierfür Beispiele. Vorteilhaft ist aber auch hier ein Zusatz von Schwefeldioxid, um die Hydrolyse der dreiwertigen Eisensalze zu Eisen(III)-oxidhydrat weitgehend zu unterdrücken.

Mit den Rezepturen 8 und 9 werden Beispiele für Suspensionen gegeben, aus denen die erfindungsgemäßen Salzaerosole gebildet werden können.

Die aus Gasen bzw. Dämpfen erzeugten Aerosole werden ausschließlich aus gasförmigen oder verdampften Salzprecursoren erzeugt. Mit Ausnahme der Lösung von Siliciumtetrabromid in Siliciumtetrachlorid werden wegen der geringen gegenseitigen Löslichkeit von Siliciumtetrachlorid und Eisen(III)chlorid und aus dem Grund der chemischen Reaktion unter Feststofffällung zwischen Siliciumtetrachlorid und Oxalsäure bzw. Ameisensäure diese Stoffe vorzugsweise nicht aus gemeinsamer Lösung verdampft. Oxalylchlorid, Formylchlorid, Siliciumtetrachlorid und Siliciumtetrabromid zeichnen sich durch ausreichende gegenseitige Löslichkeit aus, so dass diese Stoffe auch aus einer gemeinsamen Lösung verdampfbar sind.

Anhand der Reduktion des troposphärischen Methan- und CO₂-Spiegels durch den Eisensalzgehalt in der Vulkanasche der Pinatubo-Eruption von 1991, nämlich Eisenchloride, Eisenbromide und Eisensulfate, lässt sich die Treibhausgasabbaurate durch Eisensalzaerosole der Größenordnungen nach grob abschätzen: Unter Berücksichtigung der
· wesentlich höheren Reaktionsfähigkeit der erfindungsgemäß erzeugten reinen Eisensalz-Aerosole im Vergleich zur natürlichen Vulkanasche mit ihrem geringen Eisensalzgehalt,
· der gegenüber der vergleichsweise groben Vulkanasche im Vergleich zum erfindungsgemäß hergestellten Salzaerosol vielfach längeren Verweilzeit in der Atmosphäre und
· der durch die dunklen Begleitminerale und große innere Oberfläche für Sonnenlicht relativ intransparenten Bläschenglasstruktur,
liegt der spezifische Methanabbau durch das erfindungsgemäß hergestellte Eisenhalogenidaerosol um ein Mehrfaches höher als der von vulkanischer Asche. Dieser Kalkulation zufolge ist 1 kg Eisen in den Eisenhalogenidaerosolen in der Lage, etwa 10 t Methan und 60 t Kohlendioxid durch photolytisch induzierte Oxidation und Anregung der Phytoplankton-Vermehrung abzubauen.

Die jährliche globale Treibhausgasmasse, die durch menschliche Aktivitäten in die Atmosphäre gelangt, liegt bei ca. 25.000.000.000 t/a CO2-Äquivalenten. Zum Abbau dieser Treibhausgasmasse reicht nach dieser Kalkulation die leicht wirtschaftlich darstellbare globale jährliche Emission von 100.000 t Eisen als Eisenhalogenidaerosol weltweit aus, um den GWP-Effekt der anthropogen emittierten Treibhausgase zu eliminieren.

In dieser konservativen Kalkulation sind weitere Abkühlungseffekte unberücksichtigt geblieben, die durch Abbau der weiteren Treibhausfaktoren entstehen:
· Rückbau der troposphärischen Spiegel von Ozon, Ruß und Kohlenmonoxid durch chemische Reaktion mit den erfindungsgemäßen Brom-, Chlor- und Eisen-Emissionen.
· Durch die von den erfindungsgemäßen Brom-, Chlor- und Eisen-Emissionen physikalisch ausgelöste Zunahme der globalen Sonnenlicht-Reflektion.

Es ist daher damit zu rechnen, dass die notwendige jährliche Massenfracht, um den Trend der Erwärmung der Troposphäre umzukehren, wesentlich kleiner als 100.000 t/a Eisen als Eisensalz-Aerosole sein wird.

Die Zeitdauer, während der das wirkelementhaltige Halogenidaerosol in die Troposphäre erfindungsgemäß aufrechterhalten werden soll und/oder die notwendige jährliche Halogenidaerosol-Massenfracht kann nach unterschiedlichen Maßgaben bemessen werden. Eine Möglichkeit der Bemessung ist die Erfüllung des Abbaus einer vorgegebenen Masse von mindestens einem Treibhausgas aus der Gruppe Methan, Kohlendioxid, Kohlenmonoxid, Ozon durch das wirkelementhaltige Salzaerosol. Diese Bemessung bietet sich an, wenn mit dem erfindungsgemäßen Verfahren sog. Treibhausgas-Emssionszertifikate kompensiert oder generiert werden sollen.

Eine andere Möglichkeit der Bemessung der zu emittierenden wirkelementhaltigen Aerosol-Masse ist die gezielte und direkte Erfüllung von globalen Klimazielen. Das erfindungsgemäße Verfahren wird vorzugsweise in mehreren Anlagen zur Produktion und Emission des Halogenidaerosols und/oder seiner Vorläufersubstanzen ausgeführt. Diese Anlagen werden zunächst in einer unbemessenen Zeiteinheit betrieben. Vorzugsweise wird die Eisenfracht, die mit den in diesen Anlagen erzeugten eisenhaltigen Salzaerosolen emittiert wird, für die Dauer von 2 Jahren in der Summe zunächst auf 100.000 t/Jahr vorbestimmt. Innerhalb der Zweijahresfrist, während der die Emission des Aerosols in die Troposphäre geschieht, wird der Verlauf der troposphärischen und ozeanischen klimarelevanten Parameter mit den vorhandenen globalen Messstationen verfolgt:
· Rückgang, Stagnation, gebremster oder ungebremster Anstieg der Jahresdürchschnitts-Temperatur (Troposphäre),
· Rückgang, Stagnation, gebremster Anstieg oder ungebremster Anstieg des Methangehalts (Troposphäre),
· Rückgang oder Stagnation des Kohlendioxidgehalts (Troposphäre),
· Rückgang, Stagnation, gebremster oder ungebremster Anstieg des Kohlenmonoxidgehalts (Troposphäre),
· Rückgang, Stagnation, gebremster oder ungebremster Anstieg des Gehalts an dunklen Kohlenstoffpartikeln (Ruß- und huminstoffartige kohlenstoffreiche Aerosole (Troposphäre),
· Rückgang oder Stagnation des Ozongehalts (Troposphäre),
· Zunahme oder Stagnation des Chlorspiegels (Troposphäre),
· Zunahme oder Stagnation des Brom-Wirkelementspiegels (Troposphäre),
· Zunahme oder Stagnation des Eisen-Wirkelementspiegels (Troposphäre),
· Zunahme oder Stagnation der globalen Wolkenreflektion als Folge gleichbleibender oder zunehmender Wolkenbedeckung (Troposphäre),
· Zunahme oder Stagnation der globalen Wolkenreflektion als Folge gleichbleibender oder zunehmender spezifischer Wolkenreflektion (Troposphäre),
· Zunahme oder Stagnation des Chlorophyllgehalts in den Weltmeeren (Ozean).

Diese Parameter dienen zugleich der Kontrolle der Zusammensetzung der Troposphäre und zur Regelung der beständig global zu emittierten Eisenfracht nach der 2-Jahresfrist, in der die Eisenfracht auf 100.000 t/Jahr limitiert wurde. Stagnieren die Methan- und CO2-Gehalte, kann die Eisenfracht von 100.000 t/Jahr für den folgenden 2-Jahresintervall beibehalten werden. Sind die Methan- und CO2-Gehalte rückläufig, wird die Eisenfracht je nach Steilheit des Rückgangs auf einen Wert zwischen 50.000 und 90.000 t/Jahr für den folgenden 2-Jahresintervall zurückgenommen. Bleiben die Methan- und CO2-Gehalte ansteigend, wird die Eisenfracht je nach Steilheit des Anstiegs auf einen Wert zwischen 250.000 und 400.000 t/Jahr für das folgende 2-Jahresintervall angehoben.

In dieser Weise wird dann fortgefahren, bis sich die Beträge der jährlich emittierten Eisenfracht und die Klimaparameter in einen allseits akzeptierten Gleichgewichtszustand eingependelt haben.

Weil durch das erfindungsgemäße Verfahren das methanbedingte Treibhausgaspotential effektiver abgebaut wird als das kohlendioxidbedingte Treibhausgaspotential, ist es vorteilhaft, Kohlendioxid neben dem erfindungsgemäßen Verfahren parallel auch mit einem oder mehreren der bekannten nachhaltig wirksamen Verfahren, wie z. B. dem Terra-Preta-Verfahren abzubauen.

Besonders vorteilhaft ist es, das bereits patentierte Verfahren zur verbrennungstechnischen Erzeugung von Eisenoxid-Aerosolen zwecks Kühlung der Troposphäre gemäß PCT-Offenlegungsschriften mit den Int. Veröffentlichungs-Nummern: WO 03/013698 A2, WO 2008/006364 und der deutschen Offenlegungsschrift 10 2009 004 281 A1 mit dem hier zum Patent angemeldeten Verfahren zu kombinieren.

Eine vorteilhafte Anwendung des erfindungsgemäßen Verfahrens ist an Off-shore-Windkraftanlagen möglich. Die beim Auftreten ausgedehnter Windfelder entstehende oder auch die im Allgemeinen nachts anfallende überschüssige elektrische Energie aus Off-shore-Windkraftanlagen kann zur Meerwasser-Elektrolyse eingesetzt werden. Die dabei elektrolytisch gebildeten bromhaltige Chlorgase können direkt in die Troposphäre emittiert werden. Sie wirken vor allem in Kooperation mit den troposphärischen Eisensalzaerosolen des erfindungsgemäßen Verfahrens in der Troposphäre methanabbauend und ozonzersetzend.

Es ist aber von besonderem Vorteil, die Wirkelemente so rasch wie möglich in der Troposphäre oder besser noch innerhalb des Trägergasstroms in die bevorzugte Form der hygroskopischen Salzaerosole zu überführen, weil dann sogleich die Zersetzung der Treibhausgase und die Bildung der reflektierenden Wolken einsetzen kann. Es ist daher bevorzugt, die elektrolytisch oder auch gemäß den übrigen bekannten chemischen Verfahren generierten Halogene direkt zur Bildung von Eisen und Halogen enthaltenden Gasen zu nutzen, und diese dann in die Troposphäre zu emittieren. Das geschieht nach dem an und für sich bekannten Verfahren der Eisen(III)chlorid-Bildung aus Chlor und erhitztem metallischem Eisen und/oder der Siliciumtetrachlorid-Gewinnung aus Chlor und erhitztem elementarem Silicium. Die Prozesse verlaufen mit hoher Exothermie, so dass Eisen(III)chlorid und Siliciumtetrachlorid ohne weitere Wärmezufuhr gasförmig gewonnen und dann einzeln oder im Gemisch direkt dem Trägergas zugesetzt werden können.

## Patentansprüche

1. Verfahren zur kontrollierten Abkühlung der Troposphäre, bel dem die Troposphäre mit einem Aerosol angereichert wird, das mindestens das Element Eisen und mindestens eines der Elemente Chlor und Brom in Form eines hygroskopischen Salzes oder einer Salzlösung enthält, **dadurch gekennzeichnet, dass** der Troposphäre mindestens ein gasförmiger oder dampfförmiger halogenhaltiger Stoff aus der Gruppe der Chlor- und Bromverbindungen zugesetzt wird, der nicht in einer Sauerstoff oder Halogenkohlenwasserstoffe als Oxidationsmittel nutzenden Verbrennung erzeugt worden ist, wobei der halogenhaltige Stoff sich durch mindestens eine der folgenden Eigenschaften auszeichnet:
· gasförmig bei 20 °C,
· dampfförmig unterhalb von 500 °C,
· messbarer Dampfdruck oberhalb von 50 °C,
· hygroskopisch,
· hydrolysierbar,
und dass die Bildung des halogenhaltigen Stoffs durch mindestens einen der folgenden Schritte erfolgt:
· Freisetzung des halogenhaltigen Stoffs in die Troposphäre unter Anwendung der Salzwasser-Elektrolyse,
· Freisetzung des halogenhaltigen Stoffs in die Troposphäre unter Anwendung von mindestens einer Reaktion der Halogene Chlor und Brom mit einem Stoff aus der Gruppe:
metallisches Elsen,
metallisches Titan,
elementares Silicium,
Eisen-Silicium-Legierungen,
Eisen-Titan-Legierungen,
Silicium-Titan-Legierungen,
elementarer Schwefel,
Eisen-Schwefel-Verbindungen, insbesondere Eisen(II)-Sulfid.
· Freisetzung des halogenhaltigen Stoffs in die Troposphäre in Form eines Aerosols durch mechanische Verneblung, wobei der halogenhaltige Stoff die folgenden Anteile der Elemente Eisen, Chlor, Brom, Schwefel, Oxalat-Kohlenstoff und Silicium und zwar ohne Berücksichtigung des Wassergehalts des Aerosols besitzt:
| | |
|---|---|
| Eisen | gleich oder größer 5 %, |
| Chlor + Schwefel + Oxalat-Kohlenstoff + Silicium | gleich oder kleiner 90%, |
| Brom | gleich oder kleiner 5 %. |

2. Verfahren nach Anspruch 1, **dadurch gekennzeichnet, dass** der Zusatz des halogenhaltigen Stoffs zur Troposphäre in einem Trägergas erfolgt und/oder der halogenhaltige Stoff in der freien Troposphäre gebildet wird.

3. Verfahren nach Anspruch 1 oder 2, **dadurch gekennzeichnet, dass** die Troposphäre künstlich mit einem Aerosol angereichert wird, dessen Menge global einer Eisenfracht von 100.000 t pro Jahr oder weniger entspricht und dessen stoffliche Zusammensetzung neben den Elementen aus der Gruppe Eisen und Halogene mindestens ein weiteres Element aus der Gruppe Silicium, Kohlenstoff, Schwefel, und Stickstoff enthält.

4. Verfahren nach Anspruch 2, **dadurch gekennzeichnet, dass** die Anreicherung der Troposphäre mit Aerosol durch Einleiten mindestens eines dampf- und/oder gasförmigen halogenhaltigen Stoffs und mindestens eines eisenhaltigen Stoffs an mindestens einem Ort und jeweils zum gleichen Zeitpunkt in jeweils einen Trägergasstrom erfolgt,
· wobei der Trägergasstrom dabei durch eine Einhausung geführt wird oder
· der Trägergasstrom sich dabei frei durch die Atmosphäre bewegt oder
· das Trägergas und der Ort der Einleitung des halogenhaltigen Stoffs und des eisenhaltigen Stoffs in das Trägergas sich relativ zueinander bewegen, und
dass das jeweilige Trägergas nach Aufnahme des halogenhaltigen Stoffs und des eisenhaltigen Stoffs in die Troposphäre entlassen wird.

5. Verfahren nach Anspruch 2, **dadurch gekennzeichnet, dass** die Anreicherung der Troposphäre mit Aerosol durch Einleiten mindestens eines dampf- und/oder gasförmigen halogenhaltigen Stoffs und mindestens eines eisenhaltigen Stoffs an mindestens zwei getrennten Orten und/oder zu unterschiedlichen Zeiten in jeweils einen Trägergasstrom erfolgt,
· wobei der jeweilige Trägergasstrom am jeweiligen Ort der Einleitung durch eine Einhausung geführt wird oder
· der jeweilige Trägergasstrom sich frei durch die Atmosphäre bewegt oder
· das jeweilige Trägergas und der jeweilige Ort der Einleitung des halogenhaltigen Stoffs und des eisenhaltigen Stoffs in das Trägergas sich relativ zueinander bewegen, und
dass das jeweilige Trägergas nach Aufnahme des halogenhaltigen Stoffs und des eisenhaltigen Stoffs in die Troposphäre entlassen wird.

6. Verfahren nach Anspruch 4 oder 5, **dadurch gekennzeichnet, dass** der eisenhaltige Stoff dem Trägergas in der Form eines Aerosols zugegeben wird.

7. Verfahren nach einem der Ansprüche 1 bis 6, **dadurch gekennzeichnet, dass** der halogenhaltige Stoff aus der folgenden Gruppe ausgewählt ist: FeCl3, FeCl3 x 6 H2O, FeBr3, FeBr3 x 6 H2O, SiCl4, SiBr4, Br2, Cl2, BrCl, S2Cl2, SCl2, S2Br2, SBr2, HBr, HCl, NH4Cl, NH4Br, Oxalylchlorid, Oxalylbromid.

8. Verfahren nach einem der Ansprüche 1 bis 6, **dadurch gekennzeichnet, dass** der eisenhaltige Stoff aus der folgenden Gruppe ausgewählt ist: Eisen(II)-Salze, chloridfreien Eisen(III)-Salze, Eisenchalkogenide und Gemische von Eisensalzen, Eisensalzlösungen und Eisenchalkogenid-Suspensionen mit Meersalz und Meerwasser.

9. Verfahren nach Anspruch 3, **dadurch gekennzeichnet, dass** das Aerosol Oxalate und/oder Oxalsäure enthält.

10. Verfahren nach einem der Ansprüche 1 bis 9, **dadurch gekennzeichnet, dass** als Trägergasstrom der Abgasstrom und/oder der Fahrtwind eines Luftfahrzeugs oder eines Wasserfahrzeugs oder der Wind an den Rotorflügeln oder am Turm von Windkraftanlagen verwendet wird.

11. Verfahren nach Anspruch 1, **dadurch gekennzeichnet, dass** die bei der Salzwasser-Elektrolyse gebildeten Halogene und Interhalogenverbindungen unmittelbar in die Troposphäre emittiert werden.

12. Verfahren nach Anspruch 11, **dadurch gekennzeichnet, dass** Meerwasser bei der Salzwasser-Elektrolyse verwendet wird und die bei der Salzwasser-Elektrolyse gebildete Lauge in das Meer eingeleitet wird.

13. Verfahren nach Anspruch 2, **dadurch gekennzeichnet, dass** die bei der Salzwasser-Elektrolyse gebildeten Halogene durch Reaktion mit mindestens einem stückigen Stoff aus der Gruppe: metallisches Eisen, metallisches Titan, Eisen(II)-Sulfid, Eisensilicid, Eisen-Titan-Legierung und elementares Silicium zu mindestens einer gasförmigen Verbindung aus der Gruppe Eisen(III)halogenid, Siliciumtetrahalogenid, Titantetrahalogenid und Schwefelhalogenide umgesetzt werden, wobei die eine oder mehrere der gasförmigen Verbindungen unmittelbar mit einem Trägergas in die Troposphäre emittiert werden.

14. Verfahren nach Anspruch 2, **dadurch gekennzeichnet, dass** die bei der Salzwasser-Elektrolyse gebildeten Halogene durch Reaktion mit einer mindestens eine Eisenverbindung enthaltenden Lösung, mit einer gefälltes Eisenchalkogenid enthaltenden Suspension oder mit einer elementaren Schwefel enthaltenden Schmelze zu einer oder mehreren der Halogenverbindungen aus der Gruppe der Chloride umgesetzt werden, wobei die eine oder mehrere der Halogenverbindungen unmittelbar mit einem Trägergas in die Troposphäre emittiert werden.

## Claims

1. Process for the controlled cooling of the troposphere wherein the troposphere is enriched with an aerosol which includes at least the element iron and at least one of the elements chlorine and bromine in the form of a hygroscopic salt or a salt solution, **characterized in that** at least one gaseous or vaporous halogen-containing substance of the group of the chlorine and bromine compounds is added to the troposphere, the gaseous or vaporous halogen-containing substance not being produced in a combustion using oxygen or a halogen hydrocarbon as oxidant, whereby the halogen-containing substance is **characterized by** at least one of the following properties:
- gaseous at 20°C,
- vaporous below 500 °C,
- measureable vapor pressure above 50 °C,
- hygroscopic,
- hydrolizable,
and that the formation of the halogen-containing substance occurs according to at least one of the following steps:
- release of the halogen-containing substance into the troposphere by using salt water electrolysis,
- release of the halogen-containing substance into the troposphere using at least one reaction of the halogens chlorine and bromine with at least one substance out of the group:
metallic iron,
metallic titanium,
elementary silicon,
iron-silicon alloys,
iron-titanium alloys,
silicon-titanium alloys,
elementary sulfur,
iron-sulfur compounds, especially iron(II)sulfide.
- release of the halogen-containing substance into the troposphere as an aerosol by mechanical fumigation, wherein the halogen-containing substance has the following proportions of the elements iron, chlorine, bromine, sulfur, oxalate-carbon, and silicon in the composition of the released aerosol without consideration of the water content of the aerosol:
| | |
|---|---|
| iron | equal to or larger than 5% |
| chlorine + sulfur + oxalate-carbon + silicon | equal to or smaller than 90% |
| bromine | equal to or smaller than 5%. |

2. Process according to claim 1, **characterized in that** the addition of the halogen-containing material to the troposphere is carried out in a carrier gas and/or the halogen-containing substance is formed in the free troposphere.

3. Process according to claim 1 or 2, **characterized in that** the troposphere is artificially enriched with an aerosol which corresponds globally to an amount of iron-loading of 100,000 t per year or less and the material composition of which includes, apart from the elements of the group of iron and halogens, at least one further element of the group of silicon, carbon, sulfur, and nitrogen.

4. Process according to claim 2, **characterized in that** the enrichment of the troposphere with aerosol is carried out by release of at least one vaporous and/or gaseous halogen-containing substance and at least one iron-containing substance at at least one location and at the same time and in one carrier gas stream in each case,
- whereby the carrier gas stream is guided through a containment or
- the carrier gas stream freely moves through the atmosphere or
- the carrier gas and the location of introduction of the halogen-containing substance and the iron-containing substance into the carrier gas move relative to each other, and
that the respective carrier gas, after take-up of the halogen-containing substance and the iron-containing substance, is released into the troposphere.

5. Process according to claim 2, **characterized in that** the enrichment of the troposphere with aerosol is carried out by introduction of at least one vaporous and/or gaseous halogencontaining substance and at least one iron-containing substance at at least two separate locations and/or at different times in one carrier gas stream in each case,
- whereby the respective carrier gas stream is guided through a containment at the respective location of introduction or
- the respective carrier gas stream freely moves through the atmosphere or
- the respective carrier gas stream and the respective location of introduction of the halogen-containing substance and the iron-containing substance into the carrier gas move relative to each other, and
that the respective carrier gas, after take-up of the halogen-containing substance and the iron containing substance, is released into the troposphere.

6. Process according to claim 4 or 5, **characterized in that** the iron-containing substance is added to the carrier gas in the form of an aerosol.

7. Process according to any one of claims 1 to 6, **characterized in that** the halogen-containing substance is selected from the group of: FeCl3, FeCl3 x 6 H2O, FeBr3, FeBr3 x 6 H2O, SiCl4, SiBr4, Br2, C12, BrCl, S2Cl2, SC12, S2Br2, SBr2, HBr, HCl, NH4Cl, NH4Br, oxalylchloride, oxalylbromide.

8. Process according to any one of claims 1 to 6, **characterized in that** the iron-containing substance is selected from the following group of: iron(II)salts, chloride free iron(III)salts, iron chalcogenides and mixtures of iron salts, iron salt solutions and iron chalcogenide suspensions with sea salt and sea water.

9. Process according to claim 3, **characterized in that** the aerosol contains oxalates and/or oxalic acid.

10. Process according to any one of claims 1 to 9, **characterized in that** the exhaust gas stream and/or the air stream of an aircraft or water craft, or the wind at the rotor blades or at the tower of wind turbines is used as the carrier gas.

11. Process according to claim 1, **characterized in that** the halogens and inter-halogen compounds formed by salt water electrolysis are emitted directly into the troposphere.

12. Process according to claim 11, **characterized in that** sea water is used for the salt water electrolysis and that the lye formed in the salt water electrolysis is passed into the sea.

13. Process according to claim 2, **characterized in that** halogens formed in the salt water electrolysis are converted by reaction with at least one solid substance from the group of: metallic iron, metallic titanium, iron(II)sulfide, iron silicide, iron-titanium alloy and elementary silicon to at least one gaseous compound from the group iron(III)halogenide, silicon tetrahalogenide, titanium tetrahalogenide and sulfur halogenides, whereby the one or more gaseous compounds are directly released with a carrier gas into the troposphere.

14. Process according to claim 2, **characterized in that** the halogens formed in the salt water electrolysis by reaction with at least one iron-compound-containing solution, with a precipitated iron-chalcogenide-containing suspension or with an elementary sulfur-containing melt are converted to one or more halogenide compounds of the group of the chlorides, whereby the one or more halogen compounds are directly released with a carrier gas into the troposphere.

## Revendications

1. Procédé de refroidissement contrôlé de la troposphère, comportant l'enrichissement de la troposphère en un aérosol contenant au moins l'élément fer et au moins un des éléments chlore et brome sous forme d'un sel hygroscopique ou d'une solution de sel, **caractérisé en ce qu'**on introduit dans la troposphère au moins un produit halogéné qui est issu du groupe des composés chlorés et bromés et qui se présente sous forme d'un gaz ou d'une vapeur et qui n'est pas généré lors d'une combustion mettant en oeuvre de l'oxygène ou des hydrocarbures halogénés comme agent d'oxydation, ledit produit halogéné présentant au moins une des propriétés suivantes :
· se présente sous forme d'un gaz à 20 °C,
· se présente sous forme d'une vapeur en-dessous de 500 °C,
· présente une pression de vapeur mesurable en-dessus de 50 °C,
· hygroscopique
· hydrolysable,
et que la formation dudit produit halogéné est réalisée en mettant an oeuvre au moins une des étapes suivantes :
rejet dudit produit halogéné dans la troposphère en mettant en oeuvre l'électrolyse de l'eau salée,
rejet dudit produit halogéné dans la troposphère en mettant en oeuvre au moins une réaction des halogènes chlore et brome avec un produit issu du groupe suivant :
fer métallique,
titane métallique,
silicium élémentaire,
alliages de type fer-silicium,
alliages de type fer-titane,
alliages de type silicium-titane,
soufre élémentaire,
composé de type fer-soufre, s'agissant notamment de sulfure de fer(II).
rejet dudit produit halogéné dans la troposphère sous forme d'un aérosol par nébulisation mécanique, le produit halogéné possédant les proportions suivantes des éléments fer, chlore, brome, soufre, carbone d'oxalate et silicium, sans tenir compte de la teneur en eau dudit aérosol :
| | |
|---|---|
| fer | supérieure ou égale à 5 % |
| chlore + soufre + carbone d'oxalate + silicium | inférieure ou égale à 90 % |
| brome | inférieure ou égale à 5 % |

2. Procédé selon la revendication 1, **caractérisé en ce que** l'introduction dudit produit halogéné dans la troposphère est réalisée dans un gaz vecteur et/ou le produit halogéné se forme sans support au sein même de la troposphère.

3. Procédé selon la revendication 1 ou 2, **caractérisé en ce que** la troposphère est artificiellement enrichie en un aérosol dont la quantité globale correspond à une charge en fer inférieure ou égale à 100 000 t par an et dont la composition chimique comporte, outre les éléments issus du groupe constitué par le fer et les halogènes, au moins un autre élément issu du groupe constitué par le silicium, le carbone, le soufre et l'azote.

4. Procédé selon la revendication 2, **caractérisé en ce que** ledit enrichissement de la troposphère en aérosol est réalisé en introduisant dans un flux de gaz vecteur, à un ou plusieurs endroits et toujours au même moment, au moins un produit halogéné se présentant sous forme d'un gaz et/ou d'une vapeur et au moins un produit contenant du fer,
· le flux de gaz vecteur passant à cet effet à travers une enceinte, ou
· le flux de gaz vecteur circulant à cet effet librement à travers l'atmosphère, ou
· le gaz vecteur et le lieu ou ledit produit halogéné et ledit produit contenant du fer sont introduits dans le gaz vecteur se déplaçant l'un par rapport à l'autre, et
le gaz vecteur concerné étant rejeté dans la troposphère après avoir reçu ledit produit halogéné et ledit produit contenant du fer.

5. Procédé selon la revendication 2, **caractérisé en ce que** ledit enrichissement de la troposphère en aérosol est réalisé en introduisant, à au moins deux endroits séparés et/ou à différents moments, au moins un produit halogéné se présentant sous forme d'un gaz et/ou d'une vapeur et au moins un produit contenant du fer, chacun desdits produits étant introduit dans son propre flux de gaz vecteur,
· les différents flux de gaz vecteur passant, chacun à son endroit d'introduction, à travers une enceinte, ou
· les différents flux de gaz vecteur circulant chacun librement à travers l'atmosphère, ou
· chacun des différents gaz vecteurs et chacun des différents lieux où ledit produit halogéné et ledit produit contenant du fer sont introduits dans le gaz vecteur se déplaçant l'un par rapport à l'autre, et
les différents gaz vecteurs étant chacun rejeté dans la troposphère après avoir reçu ledit produit halogéné et ledit produit contenant du fer.

6. Procédé selon la revendication 4 ou 5, **caractérisé en ce que** le produit contenant du fer est introduit dans le gaz vecteur sous forme d'un aérosol.

7. Procédé selon l'une des revendications 1 à 6, **caractérisé en ce que** ledit produit halogéné est choisi dans le groupe suivant: FeCl3, FeCl3 x 6H2O, FeBr3, FeBr3 x 6 H2O, SiCl4, SiBr4, Br2, C12, BrCl, S2Cl2, SCl2, S2Br2, SBr2, HBr, HCl, NH4Cl, NH4Br, chlorure d'oxalyle, bromure d'oxalyle.

8. Procédé selon l'une des revendications 1 à 6, **caractérisé en ce que** ledit produit contenant du fer est choisi dans le groupe suivant: sels de fer(II), sels de fer (III) exempts de chlorures, chalcogénures de fer ainsi que mélanges de sels de fer, de solutions de sels de fer et de suspensions de chalcogénures de fer avec du sel marin et de l'eau de mer.

9. Procédé selon la revendication 3, **caractérisé en ce que** ledit aérosol contient des oxalates et/ou de l'acide oxalique.

10. Procédé selon l'une des revendications 1 à 9, **caractérisé en ce que** l'on utilise, en tant que flux de gaz vecteur, le flux de gaz d'échappement et/ou le vent de la course d'un aéronef ou d'une embarcation ou bien le vent auquel sont exposés les pales ou les mâts d'éoliennes.

11. Procédé selon la revendication 1, **caractérisé en ce que** les halogènes et interhalogènes obtenus par l'électrolyse de l'eau salée sont directement émis dans la troposphère.

12. Procédé selon la revendication 11, **caractérisé en ce que** l'électrolyse de l'eau salée est réalisée en mettant en oeuvre de l'eau de mer, et la lessive obtenue lors de l'électrolyse de l'eau salée est rejetée dans la mer.

13. Procédé selon la revendication 2, **caractérisé en ce que** l'on fait réagir les halogènes obtenus lors de l'électrolyse de l'eau salée avec au moins un produit qui se présente sous forme de morceau et qui est issu du groupe suivant: fer métallique, titane métallique, sulfure de fer (II), siliciure de fer, alliage de type fer-titane et silicium élémentaire, pour ainsi obtenir au moins un composé gazeux issu du groupe constitué d'halogénures de fer (III), de tétrahalogénures de silicium, de tétrahalogénures de titane et d'halogénures de soufre, ledit un ou plusieurs composés gazeux étant émis directement dans la troposphère au moyen d'un gaz vecteur.

14. Procédé selon la revendication 2, **caractérisé en ce que** l'on fait réagir les halogènes obtenus lors de l'électrolyse avec au moins une solution contenant un composé de fer, avec une suspension contenant un chalcogénure de fer précipitée, ou avec une matière fondue contenant du soufre élémentaire, pour ainsi obtenir un ou plusieurs composés halogénés issus du groupe des chlorures, ledit un ou plusieurs composés halogénés étant émis directement dans la troposphère au moyen d'un gaz vecteur.
